# EUROPÄISCHE PATENTSCHRIFT

(11) **EP 1 228 921 B1**
(45) Veröffentlichungstag und Bekanntmachung des Hinweises auf die Patenterteilung: **30.05.2007**
(21) Anmeldenummer: 02000853.8
(22) Anmeldetag: 15.01.2002
(51) Int. Cl.: B60N 2/06, B60N 3/00, B60N 2/20, B60N 2/22, B60N 2/36, B60N 2/12

(54) **Fahrzeugsitz, insbesondere Kraftfahrzeugsitz**
Automotive vehicle seat
Siège de véhicule automobile

(30) Priorität: 06.02.2001 DE 10105283
(43) Veröffentlichungstag der Anmeldung: 07.08.2002
(73) Patentinhaber: KEIPER GmbH & Co. KG, 67657 Kaiserslautern (DE)
(72) Erfinder: Kämmerer, Joachim, 67655 Kaiserslautern (DE); Kunz, Holger, 67697 Otterberg (DE); Recktenwald, Ralph, 67657 Kaiserslautern (DE)
(74) Vertreter: Patentanwälte Hosenthien-Held und Dr. Held

(56) Entgegenhaltungen:
- DE-A- 3 725 051
- US-A- 5 855 413
- PATENT ABSTRACTS OF JAPAN Bd. 0062, Nr. 36 (M-173), 25. November 1982 (1982-11-25) & JP 57 134341 A (OOI SEISAKUSHO:KK; others: 01), 19. August 1982 (1982-08-19)

## Beschreibung

Die Erfindung betrifft einen Fahrzeugsitz, insbesondere einen Kraftfahrzeugsitz, mit den Merkmalen des Oberbegriffs des Anspruches 1, wie er z.B. aus der US 5 855 413 A bekannt ist.

Bei einem bekannten Übergang in die Packagestellung wird zunächst die Rückenlehne auf das Sitzkissen geklappt und dann das so gebildete Paket um eine vordere Schwenkachse nach oben in eine aufrechte Stellung geklappt. Erfolgt dieser Übergang ohne Koordination mit dem Längseinsteller, kann es sein, daß kurz vor Erreichen der aufrechten Stellung das Paket an die Rückenlehne der vorderen Sitzreihe anschlägt. Je nach Motivation des Benutzers besteht die Gefahr, daß der Fahrzeugsitz in dieser Stellung verbleibt, also ungesichert ist. Ein bekannter Fahrzeugsitz der eingangs genannten Art umgeht die Gefahr dadurch, daß der Fahrzeugsitz unter Einsatz des Längseinstellers zunächst in die hinterste Längsposition gebracht wird und von dort aus in die Packagestellung übergeht. Bei dieser Lösung ist aber die Bedienung aufwendiger und umständlicher.

Der Erfindung liegt die Aufgabe zu Grunde, einen Fahrzeugsitz der eingangs genannten Art zu verbessern. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß zu Beginn des Übergangs in die Packagestellung und/oder Tischstellung der Längseinsteller den Fahrzeugsitz in eine bestimmte, definierte Zwischenposition bringt, kann der Übergang in eine andere Stellung ohne Störungen vollzogen werden. Dem Fahrzeugsitz steht von dieser Zwischenposition aus - im Vergleich von einer vorderen Längsposition ausgehend - nach vorne ausreichend Raum für die Einnahme der gewickelten Packagestellung zur Verfügung, wobei zugleich die Packagestellung - im Vergleich ausgehend von einer hinteren Längsposition - platzsparend dicht hinter der davor angeordneten Sitzreihe eingenommen wird. Unter einer Zwischenposition oder mittleren Längsposition soll jede Längsposition zwischen der vordersten und der hintersten Längsposition je einschließlich verstanden werden. Die Zwischenposition wird vorzugsweise herstellerseitig so definiert, daß sie auf den Fahrzeugtyp abgestimmt ist. Die Erfindung ist nicht nur für wickelbare, ausbaubare Fahrzeugsitze, sondern auch für nicht-wickelbare und nichtausbaubare Fahrzeugsitze (z.B. nur mit Tischfunktion) anwendbar.

Die Einnahme der bestimmten Zwischenposition erfolgt vorzugsweise automatisch, beispielsweise in Abhängigkeit von der Winkelstellung der Rückenlehne. Vorzugsweise ist ein Band, ein Seil oder ein anderes Zugmittel vorgesehen, welches - nach Entriegelung des Längseinstellers und vorzugsweise in Abhängigkeit der Winkelstellung der Rückenlehne - zu Beginn des Übergangs in die Packagestellung oder in die Tischstellung den Fahrzeugsitz in die Zwischenposition zieht, und dann erst der eigentliche Übergang in die Packagestellung bzw. Tischstellung vollzogen wird. Der zur normalen Einstellung der Längsposition des Fahrzeugsitzes vorgesehene Längseinsteller weist dabei vorzugsweise Sitzschienen auf, von denen die mit der Struktur des Fahrzeugsitzes fest verbundenen Oberschienen sich unter Einwirkung des Zugmittels relativ zu den mit der Struktur des Fahrzeuges verbundenen Unterschienen verschieben.

In einer bevorzugten Ausführungsform ist für das Zugmittel ein Getriebe zur Speicherung und Freigabe vorgesehen, wobei ein Ende des Zugmittels beispielsweise an einem bei der Längseinstellung stationären Bauteil und das andere Ende an einer Mitnehmerscheibe des Getriebes befestigt ist, welche in Abhängigkeit der Winkelstellung der Rückenlehne das Zugmittel aufwickelt. Das Getriebe kommt beispielsweise zum Einsatz, wenn sich der Fahrzeugsitz in einer vorderen Längsposition befindet. Das Getriebe weist zur Speicherung des Zugmittels vorzugsweise wenigstens eine Umlenkrolle und eine im konstanten Abstand zur Umlenkrolle schwenkbar gelagerte Schwinge mit einer weiteren Rolle auf, wobei die Schwinge durch eine Schwenkbewegung den Abstand von ihrer Rolle zur Umlenkrolle ändert, also mehr oder weniger Zugmittel zwischen den beiden Rollen gespeichert werden kann. Die Abhängigkeit von der Winkelstellung der Rückenlehne wird durch eine Koppel zwischen Mitnehmerscheibe und Schwinge hergestellt. Das Getriebe kann nicht nur als Viergelenkgetriebe, sondern auch als Dreigelenkgetriebe oder sonstige Getriebebauart ausgebildet sein. Zur Speicherung des Zugmittels kann auch ein Führungsteil vorgesehen sein, welches vom Zugmittel in Abhängigkeit der Längsposition des Fahrzeugsitzes auf unterschiedlich langen Wegen durchquert wird, und welches beispielsweise eine Dreiecksform mit unterschiedlich langen Flanken aufweist. Das Führungsteil kommt beispielsweise zum Einsatz, wenn sich der Fahrzeugsitz in einer hinteren Längsposition befindet.

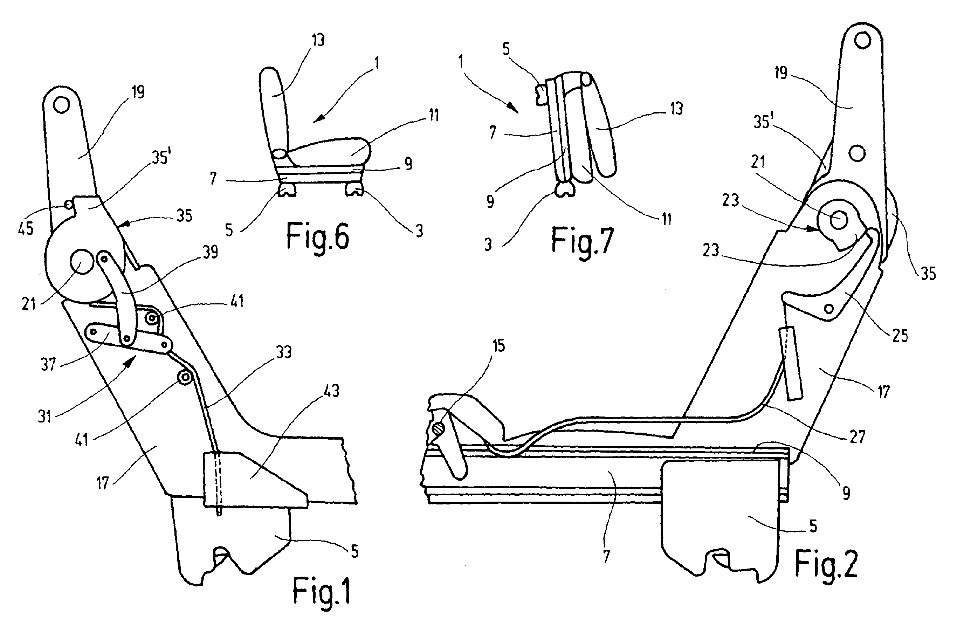

Im folgenden ist die Erfindung anhand eines in der Zeichnung dargestellten Ausführungsbeispiels näher erläutert. Es zeigen
- Fig. 1: eine Teilansicht einzelner Bauteile des Ausführungsbeispiels auf dessen Außenseite zu Beginn des Übergangs in die Packagestellung,
- Fig. 2: eine entsprechende Teilansicht einzelner Bauteile des Ausführungsbeispiels auf dessen Innenseite kurz nach dem Entriegeln der Längsverriegelung,

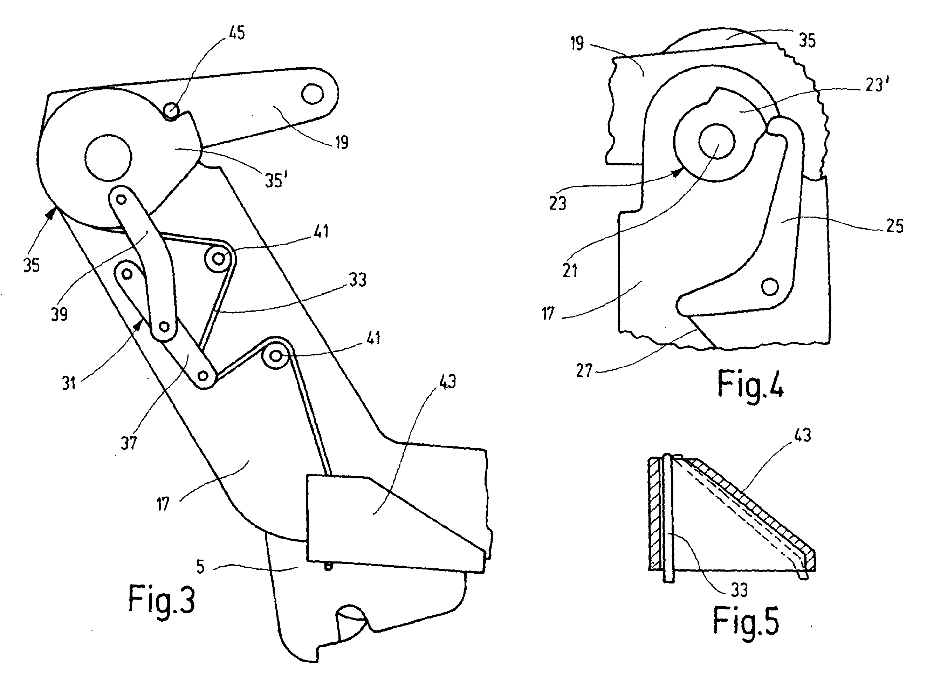

- Fig. 3: eine Fig. 1 entsprechende Teilansicht nach dem Zurückziehen des Zugmittels,
- Fig. 4: eine Fig. 2 entsprechende Teilansicht kurz vor dem Verriegeln der Längsverriegelung,
- Fig. 5: einen Schnitt durch das Führungsteil,
- Fig. 6: eine schematische Seitenansicht des Ausführungsbeispiels in einer Gebrauchsstellung, und
- Fig. 7: eine schematische Seitenansicht des Ausführungsbeispiels in der Packagestellung.

Ein Fahrzeugsitz 1 ist als hintere (zweite oder dritte) Sitzreihe eines Kraftfahrzeuges, vorzugsweise eines sogenannten Vans, ausgebildet. Um die Ladefläche zu vergrößern, kann der Fahrzeugsitz 1 von einer Gebrauchsstellung in eine gefaltete oder gewickelte, sogenannte Packagestellung überführt werden. Für eine Anpassung an verschiedene Beinlängen ist der Fahrzeugsitz 1 in Längsrichtung der Kraftfahrzeuges einstellbar, also verschiebbar und verriegelbar. Die nachfolgenden Richtungsangaben sind durch die gewöhnliche Ausrichtung des in einer Gebrauchsstellung befindlichen Fahrzeugsitzes 1 definiert.

Der Fahrzeugsitz 1 ist mittels jeweils eines auf jeder Fahrzeugsitzseite vorgesehenen, vorderen Fußes 3 und hinteren Fußes 5 an der Fahrzeugstruktur lösbar angebracht, beispielsweise eingeklinkt. Sowohl der vordere Fuß 3 als auch der hintere Fuß 5 auf jeder der beiden Fahrzeugsitzseiten ist an einer in Längsrichtung verlaufenden Unterschiene 7 befestigt. In jeder Unterschiene 7 ist eine Oberschiene 9 gleitend geführt. Die beiden Oberschienen 9 sind fest mit denjenigen Teilen der Struktur des Fahrzeugsitzes 1 verbunden, welche das Sitzkissen 11 und die Rückenlehne 13 tragen. Oberschiene 9 und Unterschiene 7 sind mittels einer Längsverriegelung 15 miteinander verriegelbar und im entriegelten Zustand als Längseinsteller relativ zu einander verschiebbar. Im hinteren Bereich jeder Oberschiene 9 ist ein Beschlagunterteil 17 fest angebracht. Ein Beschlagoberteil 19 ist mittels eines horizontal und quer zur Längsrichtung angeordneten Lehnenbolzens 21 drehbar im Beschlagunterteil 17 gelagert und durch eine nicht näher dargestellte Lehnenverriegelung mit diesem verriegelbar. Die beiden Beschlagoberteile 19 sind fest mit der Struktur der Rückenlehne 13 verbunden.

Zum Übergang von der Gebrauchsstellung in die Packagestellung soll der Fahrzeugsitz 1 in eine bevorzugte Längsposition gebracht, die Rückenlehne 13 auf das Sitzkissen 11 geklappt, die hinteren Füße 5 ausgeklinkt und dann der Fahrzeugsitz 1 um die vorderen Füße 3 in eine aufrechte Stellung geklappt werden. Hierfür wird zunächst die Rückenlehne 13 entriegelt und, beispielsweise aus ihrer Designstellung (24° gegenüber der Vertikalen nach hinten geneigt) heraus, etwas nach vorne geschwenkt. Auf der Innenseite jedes Beschlagunterteils 17 sitzt auf dem Lehnenbolzen 21 drehfest eine Nockenscheibe 23. Nach einem Schwenkwinkel von 20° aus der Designstellung heraus gelangt der Nocken 23' der Nockenscheibe 23 in Anlage an einen Arm eines Entriegelungshebels 25, welcher schwenkbar auf der Innenseite des Beschlagunterteils 17 gelagert ist. Der andere Arm des Entriegelungshebels 25 steht über einen Bowdenzug 27 in Wirkverbindung mit der Längsverriegelung 15, so daß diese bei einer weiteren Schwenkbewegung des Beschlagoberteils 19 über die Nockenscheibe 23, den schwenkenden Entriegelungshebel 25 und den Bowdenzug 27 entriegelt wird.

Auf der Außenseite des Beschlagunterteils 17 ist ein Getriebe 31 für ein seilförmiges Zugmittel, im folgenden als Band 33 bezeichnet, angeordnet. Das Getriebe 31 umfaßt eine Mitnehmerscheibe 35, welche drehbar auf dem Lehnenbolzen 21 sitzt, eine Schwinge 37, welche an einem Ende am Beschlagunterteil 17 angelenkt ist und am anderen Ende eine drehbare Rolle trägt, eine Koppel 39, welche an einem Ende an der Mitnehmerscheibe 35 exzentrisch und am anderen Ende an der Schwinge 37 mittig angelenkt ist, und zwei Umlenkrollen 41, welche drehbar am Beschlagunterteil 17 gelagert sind. Das Band 33 ist an einem Ende an der Mitnehmerscheibe 35 hinten befestigt, vorne über die obere der beiden Umlenkrollen 41 geführt, hinten über die Rolle der Schwinge 37 geführt, vorne über die untere der beiden Umlenkrollen 41 geführt, in ein geschlitzes, dreieckförmiges Führungsteil 43 hinein durch dessen Spitze und durch die geschlitze Basis wieder heraus geführt und dann am hinteren Fuß 5 befestigt, also an einem bei der Längseinstellung stationären Bauteil. Bei "gespreiztem" Getriebe 31 weist die Schwinge 37 nach unten, ist also im maximalen Abstand zu den Umlenkrollen 41. Bei "gestrecktem" Getriebe 31 weist die Schwinge 37 nach vorne, ist also im minimalen Abstand zu den Umlenkrollen 41.

Wenn der Fahrzeugsitz 1 sich in einer bestimmten Zwischenposition (Sitzreferenzpunkt oder H-Punkt), im folgenden Zwischenposition genannt, befindet, ist das Band 33 innerhalb des gespreizten Getriebes 31 gespeichert und durchquert dann das Führungsteil 43 an dessen vertikaler Flanke entlang direkt nach unten zum hinteren Fuß 5. Wenn hingegen der Fahrzeugsitz 1 sich in einer vorderen Längsposition befindet, im Ausführungsbeispiel maximal 120 mm vor der Zwischenposition, ist das Band 33 durch das dann gestreckte Getriebe 31 geführt, durchquert das Führungsteil 43 nach unten und verläuft dann parallel zur Oberschiene 9 nach hinten bis zum hinteren Fuß 5. Wenn der Fahrzeugsitz 1 sich in einer hinteren Längsposition befindet, im Ausführungsbeispiel maximal 80 mm hinter der Zwischenposition, ist das Band 33 durch das leicht gestreckte Getriebe 31 und durch das Führungsteil 43 an dessen schräg nach vorne weisender längeren Flanke entlang bis zum hinteren Fuß 5 geführt.

Nachdem das Beschlagoberteil 19 so weit nach vorne geschwenkt worden ist, daß die Längsverriegelung 15 entriegelt worden ist, gelangt beim weiteren Schwenken ein vom Beschlagoberteil 19 seitlich nach außen abstehender Mitnehmerstift 45 in Anlage an einen Nocken 35' der Mitnehmerscheibe 35, welche er bei einer weiteren Schwenkbewegung unter Drehung mitnimmt. Dadurch wird das Band 33 auf die Mitnehmerscheibe 35 auf deren Außenumfang aufgewickelt. Zugleich drückt die Mitnehmerscheibe 35 über die Koppel 39 die Schwinge 37 nach unten, d.h. das Getriebe 31 wird gespreizt. Sofern das Band 33 das gestreckte Getriebe 31 durchlaufen hat und entlang der Oberschiene 9 geführt war, d.h. der Fahrzeugsitz 1 sich in einer vorderen Längsposition befunden hat, wird das Band 33 zur Spreizung des Getriebes 31 zurückgeholt, d.h. der Fahrzeugsitz 1 wird nach hinten in die Zwischenposition gezogen. Sofern das Band 33 entlang der schrägen Flanke des Führungsteils 43 geführt war, d.h. der Fahrzeugsitz 1 sich in einer hinteren Längsposition befunden hat, wird das Band 33 zur Spreizung des Getriebes 31 ebenfalls zurückgeholt, d.h. der Fahrzeugsitz 1 wird diesmal nach vorne in die Zwischenposition gezogen.

Wenn das Beschlagoberteil 19 um 90° aus der Designstellung nach vorne geschwenkt worden ist, ist das Band 33 innerhalb des gespreizten Getriebes 31 gespeichert (zurückgezogen), und der Fahrzeugsitz 1 befindet sich in der Zwischenposition. Der Nocken 23' der Nockenscheibe 23 verläßt nun den Entriegelungshebel 25, so daß die Längsverriegelung 15 aufgrund ihrer Federbelastung selbsttätig wieder verriegelt. Bei einer weiteren Schwenkbewegung des Beschlagoberteils 19 um 20° in die Tischstellung, in welcher die Rückenlehne 13 horizontal angeordnet ist, durchläuft das Getriebe 31 einen Totpunkt, d.h. das Band 33 wird nicht weiter in das Getriebe 31 zurückgezogen. Die Lehnenverriegelung verriegelt wieder das Beschlagoberteil 19.

Je nach Bedarf kann der Fahrzeugsitz 1 nun in der Tischstellung verbleiben. Es können jetzt aber auch automatisch oder durch eine gesonderte Entriegelung die hinteren Füße 5 ausgeklinkt werden, so daß der Fahrzeugsitz 1 nunmehr hochgeklappt werden kann und sich in der aufrechten Packagestellung befindet. Die Rückkehr in eine Gebrauchsstellung erfolgt mit umgekehrtem Ablauf der beschriebenen Verfahrensschritte.

Eine Neigungseinstellung der Rückenlehne 13 erfolgt ebenfalls durch Schwenken der entriegelten Beschlagoberteile 19, und zwar in einem Winkelbereich von etwa 30° hinter der Designstellung und 20° vor der Designstellung, also bevor der Mitnehmerstift 45 in Anlage an den Nocken 35' der Mitnehmerscheibe 35 gelangt. Die Rückenlehne 13 kann also ohne Einfluß auf den Bandrückholmechanismus in eine Ruhestellung gebracht werden, d.h. das Getriebe 31 weist eine Art Freilauf auf.

### Bezugszeichenliste

- 1: Fahrzeugsitz
- 3: vorderer Fuß
- 5: hinterer Fuß
- 7: Unterschiene
- 9: Oberschiene
- 11: Sitzkissen
- 13: Rückenlehne
- 15: Längsverriegelung
- 17: Beschlagunterteil
- 19: Beschlagoberteil
- 21: Lehnenbolzen
- 23: Nockenscheibe
- 23': Nocken der Nockenscheibe
- 25: Entriegelungshebels
- 27: Bowdenzug
- 31: Getriebe
- 33: Band, Zugmittel
- 35: Mitnehmerscheibe
- 35': Nocken der Mitnehmerscheibe
- 37: Schwinge
- 39: Koppel
- 41: Umlenkrolle
- 43: Führungsteil
- 45: Mitnehmerstift

## Patentansprüche

1. Fahrzeugsitz, insbesondere Kraftfahrzeugsitz, mit einer Rückenlehne (13) und mit einem Längseinsteller (7, 9) zur Einstellung der Längsposition, wobei der Fahrzeugsitz (1) von wenigstens einer Gebrauchsstellung in eine Tischstellung und/oder eine Packagestellung überführbar ist, **dadurch gekennzeichnet, daß** zu Beginn des Übergangs in die Tischstellung bzw. Packagestellung der Fahrzeugsitz (1) in eine bestimmte Zwischenposition des Längseinstellers (7, 9) gebracht wird.

2. Fahrzeugsitz nach Anspruch 1, **dadurch gekennzeichnet, daß** die Betätigung des Längseinstellers (7, 9) zu Beginn des Übergang in die Tischstellung bzw. Packagestellung in Abhängigkeit von der Winkelstellung der Rückenlehne (13) erfolgt.

3. Fahrzeugsitz nach Anspruch 1 oder 2, **gekennzeichnet durch** ein Zugmittel (33), welches zu Beginn des Übergangs in die Tischstellung bzw. Packagestellung den Fahrzeugsitz (1) in die Zwischenposition zieht.

4. Fahrzeugsitz nach Anspruch 3, **dadurch gekennzeichnet, daß** die Aktivierung des Zugmittels (33) zu Beginn des Übergangs die Tischstellung bzw. Packagestellung in Abhängigkeit von der Winkelstellung der Rückenlehne (13) erfolgt.

5. Fahrzeugsitz nach Anspruch 3 oder 4, **dadurch gekennzeichnet, daß** das Zugmittel (33) an einem Ende an einem bei der Längseinstellung stationären Bauteil (5) befestigt ist.

6. Fahrzeugsitz nach einem der Ansprüche 3 bis 5, **gekennzeichnet durch** ein Getriebe (31) zur Speicherung und zur Freigabe des Zugmittels (33).

7. Fahrzeugsitz nach Anspruch 6, **dadurch gekennzeichnet, daß** das Getriebe (31) eine Mitnehmerscheibe (35) aufweist, an welcher das Zugmittel (33) an einem Ende befestigt ist und welche in Abhängigkeit der Winkelstellung der Rückenlehne (13) das Zugmittel (33) aufwickelt.

8. Fahrzeugsitz nach Anspruch 6 oder 7, **dadurch gekennzeichnet, daß** das Getriebe (31) wenigstens eine Umlenkrolle (41) für das Zugmittel (33) und eine im konstanten Abstand zur Umlenkrolle (41) schwenkbar gelagerte Schwinge (37) mit einer weiteren Rolle aufweist, wobei die Schwinge (37) durch eine Schwenkbewegung den Abstand von ihrer Rolle zur Umlenkrolle (41) ändert.

9. Fahrzeugsitz nach Anspruch 7 und 8, **dadurch gekennzeichnet, daß** die Mitnehmerscheibe (35) und die Schwinge (37) gelenkig miteinander gekoppelt sind.

10. Fahrzeugsitz nach Anspruch einem der Ansprüche 3 bis 9, **gekennzeichnet durch** ein Führungsteil (43), welches vom Zugmittel (33) in Abhängigkeit der Längsposition des Fahrzeugsitzes (1) auf unterschiedlich langen Wegen durchquert wird.

## Claims

1. Vehicle seat, especially a motor vehicle seat, having a backrest (13) and a length adjuster (7, 9) for adjusting the longitudinal position, wherein the vehicle seat (1) is convertible from at least one position of use into a table position and/or a luggage space position, **characterised in that** at the start of the transfer into the table position and/or luggage space position, the vehicle seat (1) is brought into a specific intermediate position of the length adjuster (7, 9).

2. Vehicle seat according to Claim 1, **characterised in that** the operation of the length adjuster (7, 9) at the start of the transfer into the table position or luggage space position is effected as a function of the angular position of the back rest (13).

3. Vehicle seat according to Claim 1 or 2, **characterised by** a tension means (33) that pulls the vehicle seat (1) into the intermediate position at the start of the transfer into the table position or luggage space position.

4. Vehicle seat according to Claim 3, **characterised in that** the activation of the tension means (33) at the start of the transfer into the table position or luggage space position is effected as a function of the angular position of the back rest (13).

5. Vehicle seat according to Claim 3 or 4, **characterised in that** the tension means (33) is secured at one end to a component (5) that is stationary during the longitudinal adjustment.

6. Vehicle seat according to any one of Claims 3 to 5, **characterised by** a gear mechanism (31) for storage and release of the tension means (33).

7. Vehicle seat according to Claim 6, **characterised in that** the gear mechanism (31) comprises a driving plate (35), to which the tension means (33) is secured at one end and which winds up the tension means (33) as a function of the angular position of the backrest (13).

8. Vehicle seat according to Claim 6 or 7, **characterised in that** the gear mechanism (31) comprises at least one guide roller (41) for the tension means (33) and, pivotally mounted at a constant spacing from the guide roller (41), a rocker (37) having a further roller, the rocker (37) altering the distance of its roller from the guide roller (41) by a pivoting movement.

9. Vehicle seat according to Claim 7 and 8, **characterised in that** the driving plate (35) and the rocker (37) are coupled in an articulated manner.

10. Vehicle seat according to any one of Claims 3 to 9, **characterised by** a guide part (43), through which the tension means (33) passes on paths of different length as a function of the longitudinal position of the vehicle seat (1).

## Revendications

1. - Siège de véhicule, en particulier siège de véhicule automobile, avec un dossier (13) et avec un dispositif de réglage en longueur (7, 9) pour le réglage de la position en longueur, à l'occasion de quoi le siège de véhicule (1) est capable d'être transféré d'au moins une position d'utilisation dans une position de table et/ou une position de package, **caractérisé par le fait qu'**au début du passage dans la position de table ou dans la position de package, le siège de véhicule (1) est amené dans une position intermédiaire déterminée du dispositif de réglage en longueur (7, 9).

2. - Siège de véhicule selon la revendication 1, **caractérisé par le fait que** l'actionnement du dispositif de réglage en longueur (7, 9) au début du passage dans la position de table ou dans la position de package a lieu en fonction de la position angulaire du dossier (13).

3. - Siège de véhicule selon l'une des revendications 1 ou 2, **caractérisé par** un moyen de traction (33), lequel au début du passage dans la position de table ou dans la position de package tire le siège de véhicule (1) dans la position intermédiaire.

4. - Siège de véhicule selon la revendication 3, **caractérisé par** l'activation du moyen de traction (33) au début du passage dans la position de siège ou dans la position de package a lieu en fonction de la position angulaire du dossier (13).

5. - Siège de véhicule selon l'une des revendications 3 ou 4, **caractérisé par le fait que** le moyen de traction (33) est fixé à une extrémité sur un composant (5) stationnaire lors du réglage en longueur.

6. - Siège de véhicule selon l'une des revendications 3 à 5, **caractérisé par** un mécanisme (31) pour le stockage et pour le déblocage du moyen de traction (33).

7. - Siège de véhicule selon la revendication 6, **caractérisé par le fait que** le mécanisme (31) présente un disque d'entraînement (35), sur lequel le moyen de traction (33) est fixé à une extrémité et lequel enroule le moyen de traction (33) en fonction de la position angulaire du dossier (13).

8. - Siège de véhicule selon l'une des revendications 6 ou 7, **caractérisé par le fait que** le mécanisme (31) présente au moins une poulie de renvoi (41) pour le moyen de traction (33) et une bielle (37) montée pivotante à distance constante de la poulie de renvoi (41) avec une autre poulie, à l'occasion de quoi la tige (37) par un mouvement de pivotement modifie la distance de sa poulie à la poulie de renvoi (41).

9. - Siège de véhicule selon l'une des revendications 7 ou 8, **caractérisé par le fait que** le disque d'entraînement (35) et la bielle (37) sont couplés l'un à l'autre de façon articulée.

10. - Siège de véhicule selon l'une quelconque des revendications 3 à 9, **caractérisé par** une pièce de guidage (43), laquelle est traversée par le moyen de traction (33) en fonction de la position en longueur du siège de véhicule (1) sur des voies de longueur différente.
